(19) Europäisches Patentamt / European Patent Office / Office européen des brevets

(11) **EP 3 319 787 B1**

(12) **EUROPEAN PATENT SPECIFICATION**

(45) Date of publication and mention
of the grant of the patent:
**17.11.2021 Bulletin 2021/46**

(51) Int Cl.:
**B29C 67/00** *(2017.01)* **C08L 67/02** *(2006.01)*
**C08L 67/04** *(2006.01)*

(21) Application number: **16744670.7**

(22) Date of filing: **05.07.2016**

(86) International application number:
**PCT/EP2016/065797**

(87) International publication number:
**WO 2017/005730 (12.01.2017 Gazette 2017/02)**

(54) **USE OF POLYMER COMPOSITIONS FOR THE PRODUCTION OF FILAMENTS FOR FUSED DEPOSITION MODELLING**

VERWENDUNG VON POLYMERZUSAMMENSETZUNGEN ZUR HERSTELLUNG VON FILAMENTEN ZUR SCHMELZABLAGERUNGSMODELLIERUNG

UTILISATION DE COMPOSITIONS POLYMÈRES POUR LA FABRICATION DE FILAMENTS POUR MODELAGE PAR DÉPÔT EN FUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2015 IT UB20152027**

(43) Date of publication of application:
**16.05.2018 Bulletin 2018/20**

(73) Proprietor: **Novamont S.p.A.**
**28100 Novara (IT)**

(72) Inventors:
• **SALICE, Patrizio**
**I-20813 Bovisio-Masciago (MB) (IT)**
• **LOMBI, Roberto**
**I-28100 Novara (IT)**
• **GESTI' GARCIA, Sebastià**
**I-10100 Torino (IT)**

(74) Representative: **Zanoli, Enrico et al**
**Zanoli & Giavarini S.p.A.**
**Via Melchiorre Gioia, 64**
**20125 Milano (IT)**

(56) References cited:
**WO-A1-2013/101992     WO-A1-2015/069986**

**Description**

This invention relates to the use of filaments in a fused deposition modelling (FDM) printing process and printed objects obtained using the said printing process.

FDM printing is an additive production technology which makes it possible to print three-dimensional objects from filaments (or strands) of thermoplastic material and is commonly used for the production of models and prototypes.

The FDM printing process provides for the deposition of overlapping layers of a filament of thermoplastic material while the latter is in the fused state. The filament is thrust by a toothed wheel through a melting unit provided with a nozzle from which the material in the fused state is deposited as successive layers on a printing plane thus progressively forming the various layers of the desired object. The nozzle from which the fused filament emerges is moved with respect to the printing plane in both the horizontal and vertical directions by a digitally controlled mechanism directly controlled by the appropriate printer software in which the operator has preselected the three-dimensional model of the object which is to be produced. Various thermoplastic materials which are suitable for use in FDM printing processes, such as for example ABS resins, polylactic acid, poly(ethylene terephthalate) and polyamides are available on the market. Of these, polylactic acid has recently found increasingly greater use because of its properties of easy use, its source in raw materials of renewable origin and the possibility of manufacturing biodegradable objects with it.

The use of polylactic acid in FDM printing processes does however still have many critical aspects in comparison with the other materials, including in particular the brittleness of the filament, which can break during movement of the melting device in the process of layer deposition, and the poor dimensional stability of the manufactured articles obtained, which very often results in distortion of their original shape after cooling. Filaments made of polylactic acid also result in printed objects with obvious surface defects if fused at temperatures below 210°C. Finally the fused filaments of polylactic acid have little adhesion to the printing planes on which they are deposited, above all in the case of those made of glass, and thus do not always guarantee faithful reproduction of the planned object.

WO 2013/101992 A1 discloses a composition comprising 65 to 95 weight percent of poly(trimethylene terephthalate-co-sebacate), 5 to 35 weight percent of polylactic acid, and 0.01 to 0.1 weight percent of an epoxy containing chain extender. This composition can be easily processed by melt blowing, which is useful for packaging and for preparing biodegradable garbage bags.

WO 2015/069986 A1 describes the use of a biodegradable polylactic acid (PLA) for the preparation of strands for FDM printing.

There is therefore a need to identify materials having properties which are suitable for FDM printing processes while maintaining the advantages of polylactic acid filaments in terms of biodegradability and ease of use, but improving performance in terms of breaking strength, adhesion to the moulded layers and the dimensional stability of moulded objects.

It has now surprisingly been discovered that it is possible to meet this requirement by using filaments in a fused deposition modelling (FDM) printing process, said filaments comprising a composition comprising:

i. 10-90% by weight, preferably 20-75%, with respect to the total of components i.-iv., of at least one polyester comprising:

a) a dicarboxylic component, comprising with respect to the total of the dicarboxylic component:

a1) 0-80% in moles, preferably 0-60% in moles, of units deriving from at least one aromatic dicarboxylic acid,
a2) 20-100% in moles, preferably 40-100% in moles, of units deriving from at least one saturated aliphatic dicarboxylic acid,
a3) 0-5% in moles, preferably 0.1-1% in moles, more preferably 0.2-0.7% in moles, of units deriving from at least one unsaturated aliphatic dicarboxylic acid;

b) a diol component comprising, with respect to the total of the diol component:

b1) 95-100% in moles, preferably 97-100% in moles, of units deriving from at least one saturated aliphatic diol;
b2) 0-5% in moles, preferably 0-3% in moles, of units deriving from at least one unsaturated aliphatic diol;

ii. 5-90% by weight, preferably 10-80% by weight with respect to the sum of components i.-iv., of at least one polyhydroxyalkanoate;
iii.0-5% by weight, preferably 0-1% with respect to the sum of components i.-iv., of at least one cross-linking agent and/or chain extender comprising at least one di- and/or multiple functional group compound containing isocyanate, peroxide, carbodiimide, isocyanurate, oxazoline, epoxy, anhydride, or divinylether groups, and mixtures thereof;

iv. 0-50% by weight, preferably 0-30% by weight with respect to the sum of components i.-iv., of at least one filler agent.

The said filaments are generally sold in the form of bobbins or spools. During the FDM printing process the filament is unwound through the movement of the toothed wheel which forces the filament through the inlet of the melting unit. Thanks to the composition used according to this invention the filaments comprising the composition used according to this invention have improved properties in terms of breaking strength in comparison with ordinary polylactic acid filaments.

As far as the polyesters of the composition used according to this invention are concerned, these comprise a dicarboxylic component which comprises with respect to the total of the dicarboxylic component 0-80% in moles, preferably 20-70% in moles, more preferably 50-60 % in moles of units deriving from at least one aromatic dicarboxylic acid and 20-100% in moles, preferably 40-100% in moles, of units deriving from at least one saturated aliphatic dicarboxylic acid and 0-5% in moles, preferably 0.1-1% in moles, more preferably 0.2-0.7% in moles, of units deriving from at least one unsaturated aliphatic dicarboxylic acid.

The aromatic dicarboxylic acids are preferably selected from aromatic dicarboxylic acids of the phthalic acid type, preferably terephthalic acid or isophthalic acid, more preferably terephthalic acid, and heterocyclic dicarboxylic aromatic compounds, preferably 2,5-furandicarboxylic acid, 2,4-furandicarboxylic acid, 2,3-furandicarboxylic acid, 3,4-furandicarboxylic acid, more preferably 2,5-furandicarboxylic acid, their esters, salts and mixtures. In a preferred embodiment the said aromatic dicarboxylic acids comprise:

- from 1 to 99% in moles, preferably from 5 to 95% and more preferably from 10 to 80%, of terephthalic acid, its esters or salts;
- from 99 to 1% in moles, preferably from 95 to 5% in moles and more preferably from 90 to 20%, of 2,5-furandicarboxylic acid, its esters and salts.

The saturated aliphatic dicarboxylic acids are preferably selected from $C_2$-$C_{24}$, preferably $C_4$-$C_{13}$, more preferably $C_4$-$C_{11}$ saturated dicarboxylic acids, their $C_1$-$C_{24}$, preferably $C_1$-$C_4$ alkyl esters, their salts and their mixtures. Preferably the saturated aliphatic dicarboxylic acids are selected from: succinic acid, 2-ethylsuccinic acid, glutaric acid, 2-methylglutaric acid, adipic acid, pimelic acid, suberic acid, azelaic acid, sebacic acid, undecandioic acid, dodecandioic acid, brassylic acid and their $C_{1-24}$ alkyl esters. In a preferred embodiment of this invention the saturated aliphatic dicarboxylic acid comprise mixtures comprising at least 50% in moles, preferably more than 60% in moles, more preferably more than 65% in moles, of succinic acid, adipic acid, azelaic acid, sebacic acid, brassylic acid, their $C_1$-$C_{24}$, preferably $C_1$-$C_4$ esters, and their mixtures.

The unsaturated aliphatic dicarboxylic acids are preferably selected from itaconic acid, fumaric acid, 4-methylene-pimelic acid, 3,4-bis(methylene) nonandioic acid, 5-methylene-nonandioic acid, their $C_1$-$C_{24}$, preferably $C_1$-$C_4$ alkyl esters, their salts and their mixtures. In a preferred embodiment of this invention the unsaturated aliphatic dicarboxylic acids comprise mixtures comprising at least 50% in moles, preferably more than 60% in moles, more preferably more than 65% in moles, of itaconic acid and its $C_1$-$C_{24}$, preferably $C_1$-$C_4$, esters. More preferably the unsaturated aliphatic dicarboxylic acids comprise itaconic acid.

The diol component of the polyesters of the composition used according to this invention comprise 95-100% in moles, preferably 97-100% in moles with respect to the total of the diol component, of units deriving from at least one saturated aliphatic diol and 0-5% in moles, preferably 0-3% in moles with respect to the total of the diol component, of units deriving from at least one unsaturated aliphatic diol. In a preferred embodiment the diol component of the polyesters of the composition used according to this invention comprises saturated aliphatic diols.

As far as the saturated aliphatic diols are concerned, these are preferably selected from 1,2-ethandiol, 1,2-propandiol, 1,3-propandiol, 1,4-butandiol, 1,5-pentandiol, 1,6-hexandiol, 1,7-heptandiol, 1,8-octandiol, 1,9-nonandiol, 1,10-decandiol, 1,11-undecandiol, 1,12-dodecandiol, 1,13-tridecandiol, 1,4-cyclohexandimethanol, neopentylglycol, 2-methyl-1,3-propandiol, dianhydrosorbitol, dianhydromannitol, dianhydroiditol, cyclohexandiol, cyclohexanmethandiol, dialkylene glycols and polyalkylene glycols having a molecular weight of 100-4000 such as for example polyethylene glycol, polypropylene glycol and their mixtures. Preferably the diol component comprises at least 50% in moles of one or more diols selected from 1,2-ethandiol, 1,3-propandiol, 1,4-butandiol. More preferably the diol component comprises or consists of 1,4-butandiol.

As far as the unsaturated aliphatic diols are concerned these are preferably selected from cis 2-butene-1,4-diol, trans 2-butene-1,4-diol, 2-butyn-1,4-diol, cis 2-pentene-1,5-diol, trans 2-pentene-1,5-diol, 2-pentyne-1,5-diol, cis 2-hexene-1,6-diol, trans 2-hexene-1,6-diol, 2-hexyne-1,6-diol, cis 3-hexene-1,6-diol, trans 3-hexene-1,6-diol, 3-hexyne-1,6-diol.

As far as the polyesters of the composition are concerned, these are preferably selected from aliphatic polyesters ("AP") and aliphatic-aromatic polyesters ("AAPE").

In the meaning of this invention, by aliphatic polyesters, AP, are meant polyesters comprising a dicarboxylic component which comprises 95-100% in moles of at least one saturated aliphatic dicarboxylic acid with respect to the total moles of the dicarboxylic component and 0-5% in moles of at least one unsaturated aliphatic dicarboxylic acid and a diol component comprising 95-100% in moles of units deriving from at least one saturated aliphatic diol and 0-5% in moles of units deriving from at least one unsaturated aliphatic diol with respect to the total moles of the diol component.

By AAPE polyesters there are meant in this invention polyesters comprising a dicarboxylic component comprising at least one dicarboxylic aromatic compound, at least one saturated aliphatic dicarboxylic acid and 0-5% in moles with respect to the total moles of the dicarboxylic component of at least one unsaturated aliphatic dicarboxylic acid and a diol component comprising 95-100% in moles of units deriving from at least one saturated aliphatic diol and 0-5% in moles of units deriving from at least one unsaturated aliphatic diol with respect to the total moles of the diol component.

In the case of aliphatic polyesters, AP, those preferred are polyesters in which the dicarboxylic component comprises units deriving from at least one $C_2$-$C_{24}$, preferably $C_4$-$C_{13}$, more preferably $C_4$-$C_{11}$ saturated aliphatic dicarboxylic acid, their $C_1$-$C_{24}$, preferably $C_1$-$C_4$, alkyl esters, their salts and mixtures and a diol component comprising units deriving from at least one saturated aliphatic diol preferably selected from 1,2-ethandiol, 1,2-propandiol, 1,3-propandiol, 1,4-butandiol.

In a preferred embodiment of this invention polyester i. of the composition comprises at least one aliphatic polyester (AP), preferably poly(1,4-butylene succinate), poly(1,4-butylene adipate), poly (1,4-butylene azelate), poly(1,4-butylene sebacate), poly(1,4-butylene adipate-co-1,4-butylene succinate), poly(1,4-butylene azelate-co-1,4-butylene succinate), poly(1,4-butylene sebacate-co-1,4-butylene succinate), poly(1,4-butylene succinate-co-1,4-butylene adipate-co-1,4-butylene azelate). In a particularly preferred embodiment the said aliphatic polyester is poly (1,4-butylene succinate).

In a further preferred embodiment of this invention the polyester in the composition comprises at least one aliphatic-aromatic polyester (AAPE), and is advantageously selected from:

(A) polyesters comprising repeated units deriving from aromatic dicarboxylic acids of the phthalic acid type, preferably terephthalic acid, aliphatic dicarboxylic acids and aliphatic diols (AAPE-A), characterised by an aromatic units content of between 35% and 60% in moles, preferably between 45 and 55% in moles with respect to total moles of the dicarboxylic component. The AAPE-A polyesters are preferably selected from: poly(1,4-butylene adipate-co-1,4-butylene terephthalate), poly(1,4-butylene sebacate-co-1,4-butylene terephthalate), poly(1,4-butylene azelate-co-1,4-butylene terephthalate), poly(1,4-butylene brassylate-co-1,4-butylene terephthalate), poly(1,4-butylene succinate-co-1,4-butylene terephthalate), poly(1,4-butylene adipate-co-1,4-butylene sebacate-co-1,4-butylene terephthalate), poly(1,4-butylene azelate-co-1,4-butylene sebacate-co-1,4-butylene terephthalate), poly(1,4-butylene adipate-co-1,4-butylene azelate-co-1,4-butylene terephthalate), poly(1,4-butylene succinate-co-1,4-butylene sebacate-co-1,4-butylene terephthalate), poly(1,4-butylene adipate-co-1,4-butylene succinate-co-1,4-butylene terephthalate). poly(1,4-butylene azelate-co-1,4-butylene succinate-co-1,4-butylene terephthalate).

(B) polyesters comprising repeated units deriving from heterocyclic dicarboxylic aromatic compounds, preferably 2,5-furandicarboxylic acid, aliphatic dicarboxylic acids and aliphatic diols (AAPE-B), characterised by an aromatic units content of between 50-80% in moles, preferably between 60 and 75% in moles with respect to total moles of the dicarboxylic component. The AAPE-B polyesters are preferably selected from: poly(1,4-butylene adipate-co-1,4-butylene 2,5-furandicarboxylate), poly(1,4-butylene sebacate-co-1,4-butylene 2,5-furandicarboxylate), poly(1,4-butylene azelate-co-1,4-butylene 2,5-furandicarboxylate), poly(1,4-butylene brassylate-co-1,4-butylene 2,5-furandicarboxylate), poly(1,4-butylene succinate-co-1,4-butylene 2,5-furandicarboxylate), poly(1,4-butylene adipate-co-1,4-butylene sebacate-co-1,4-butylene 2,5-furandicarboxylate), poly(1,4-butylene azelate-co-1,4-butylene sebacate-co-1,4-butylene 2,5-furandicarboxylate), poly(1,4-butylene adipate-co-1,4-butylene azelate-co-1,4-butylene 2,5-furandicarboxylate), poly(1,4-butylene succinate-co-1,4-butylene sebacate-co-1,4-butylene 2,5-furandicarboxylate), poly(1,4-butylene adipate-co-1,4-butylene succinate-co-1,4-butylene 2,5-furandicarboxylate), poly(1,4-butylene azelate-co-1,4-butylene succinate-co-1,4-butylene 2,5-furandicarboxylate).

In addition to the dicarboxylic component and the diol component the polyesters of the composition used according to this invention preferably comprise repeated units deriving from at least one hydroxy acid in a quantity of between 0 and 49%, preferably between 0 and 30%, in moles with respect to total moles of the dicarboxylic component. Examples of convenient hydroxy acids are glycolic, hydroxybutyric, hydroxycaproic, hydroxyvaleric, 7-hydroxyheptanoic, 8-hydroxycaproic and 9-hydroxynonanoic acids, lactic acid or lactides. The hydroxy acids may be inserted into the chain as such or may also be first caused to react with diacids or diols.

Long molecules with two functional groups, including those with functional groups not in the terminal position, may also be present in quantities not exceeding 10% in moles in relation to total moles of the dicarboxylic component. Examples are dimer acids, ricinoleic acids and acids incorporating epoxy and even polyoxyethylene functional groups having a molecular weight of between 200 and 10000.

Diamines, amino acids or amino alcohols in percentages up to 30% in moles with respect of total moles of dicarboxylic component may also be present.

During preparation of the polyesters of the composition used according to this invention one or more molecules having multiple functional groups may also advantageously be added in quantities between 0.1 and 3% in moles with respect to total moles of dicarboxylic component (including any hydroxy acids) in order to obtain branched products. Examples of these molecules are glycerol, pentaerythritol, trimethylol propane, citric acid, dipentaerythritol, acid triglycerides and polyglycerols.

The molecular weight Mn of the polyesters of the composition used according to this invention is preferably between 30000 and 80000, preferably between 40000 and 70000. As far as the polydispersity index of the molecular weights Mw/Mn is concerned, this is instead preferably between 1.5 and 10, more preferably between 1.6 and 5 and even more preferably between 1.8 and 2.7.

The $M_n$ and $M_w$ molecular weights may be measured by Gel Permeation Chromatography (GPC). The determination may be performed with the chromatography system held at 40°C, using a set of three columns in series (particle diameter 5 $\mu$ and porosities 500 Å, 10000 Å and 100000 Å respectively), a refractive index detector, chloroform as eluent (flow 1 ml/min), using polystyrene as the reference standard.

The terminal acid groups content of the polyesters of the composition used according to this invention is preferably between 40 and 160 meq/kg.

The terminal acid groups content may be measured in the following way: 1.5-3 g of polyester is placed in a 100 ml flask together with 60 ml of chloroform. After the polyester has been completely dissolved 25 ml of 2-propanol is added together with 1 ml of deionised water immediately before the analysis. The solution so obtained is titrated with a previously standardised solution of NaOH in ethanol. An appropriate indicator, such as for example a glass electrode for acid-base titrations in non-aqueous solvents is used to determine the end point of the titration. The terminal acid groups content is calculated on the basis of the consumption of NaOH solution in ethanol using the following equation:

$$= \frac{\left[ \left( V_{eq} - V_b \right) \cdot T \right] \cdot 1000}{P}$$

Terminal acid groups content (meq/kg polymer)

in which: $V_{eq}$ = ml of NaOH solution in ethanol at the end point of the titration of the sample;
$V_b$ = ml of NaOH solution in ethanol required to achieve pH = 9.5 in the blank titration;
$T$ = concentration of the NaOH solution in ethanol expressed in moles/litre;
$P$ = weight of the sample in grams.

Preferably the polyesters of the composition used according to this invention have an inherent viscosity (measured using an Ubbelohde viscosity meter for solutions in $CHCl_3$ having a concentration of 0.2 g/dl at 25°C) of more than 0.3 dl/g, preferably between 0.3 and 2 dl/g, more preferably between 0.4 and 1.1 dl/g.

Preferably the polyesters of the composition used according to this invention are biodegradable. In the meaning of this invention, by biodegradable polymers are meant polymers which are biodegradable in accordance with standard EN 13432.

The polyesters of the composition used according to this invention may be synthesised by means of any of the processes known in the state of the art. In particular they can advantageously be obtained by means of a polycondensation reaction.

Advantageously the process of synthesis may be carried out in the presence of a suitable catalyst. As suitable catalysts mention may for example be made of organometallic compounds of tin, for example stannoic acid derivatives, titanium compounds, for example orthobutyltitanate, aluminium compounds, for example Al-triisopropyl, and compounds of antimony and zinc and zirconium and mixtures thereof.

The composition used according to this invention comprises 5-90% by weight, preferably 36-85% by weight, more preferably 40-75% by weight with respect to the sum of components i.-iv., of at least one polyhydroxyalkanoate (component ii), preferably selected from the group comprising polyesters of lactic acid, poly-s-caprolactone, poly hydroxybutyrate, poly hydroxybutyrate-valerate, poly hydroxybutyrate propanoate, poly hydroxybutyrate-hexanoate, poly hydroxybutyrate-decanoate, poly hydroxybutyrate-dodecanoate, poly hydroxybutyrate-hexadecanoate, poly hydroxybutyrate-octadecanoate, poly 3-hydroxybutyrate 4-hydroxybutyrate. Preferably the polyhydroxyalkanoate of the composition comprises at least 80% by weight of one or more polyesters of lactic acid.

In a preferred embodiment the polyesters of lactic acid are selected from the group comprising poly L lactic acid, poly D lactic acid, poly D-L lactic acid stereocomplex, copolymers comprising more than 50% in moles of the said polyesters of lactic acid or their mixtures. Polyesters of lactic acid containing at least 95% by weight of repeated units deriving from L-lactic or D-lactic acids or their combinations having a molecular weight Mw of more than 50,000 and having a shear viscosity of between 50 and 700 Pas, preferably between 80 and 500 Pas (measured in accordance with standard ASTM D3835 at T = 190°C, shear rate = 1000 s$^{-1}$, D = 1 mm, L/D = 10), such as for example products of the Ingeo™ Biopolymer 4043D, 3251D and 6202D type, are particularly preferred.

In a particularly preferred embodiment of the invention the lactic acid polyester comprises 96% by weight of units deriving from L-lactic acid, 4% of repeated units deriving from D-lactic acid, and has a melting point in the range 145-155°C, a glass transition temperature (Tg) in the range 55-65°C and an MFR (measured in accordance with standard ASTM-D1238 at 190°C and 2.16 kg) in the range 1-6 g/10 min, preferably 2-4 g/10 min.

In the composition used according to this invention the cross-linking agent or chain extender (component iii) is selected from di- and/or multiple functional group compounds incorporating isocyanate, peroxide, carbodiimide, isocyanurate, oxazoline, epoxy, anhydride or divinylether groups, and mixtures thereof. Preferably the cross-linking agent and/or chain extender comprises at least one di- and/or multiple functional group compound containing isocyanate groups. More preferably the cross-linking agent and/or chain extender comprises at least 25% by weight of one or more di- and/or multiple functional group compounds incorporating isocyanate groups. Particularly preferred are mixtures of di- and/or multiple functional group compounds incorporating isocyanate groups with di- and/or multiple functional group compounds incorporating epoxy groups, even more preferably comprising at least 75% by weight of di- and/or multiple functional group compounds incorporating isocyanate groups.

The di- and multiple functional group compounds incorporating isocyanate groups are preferably selected from p-phenylene diisocyanate, 2,4-toluene diisocyanate, 2,6-toluene diisocyanate, 4,4-diphenylmethane-diisocyanate, 1,3-phenylene-4-chloro diisocyanate, 1,5-naphthalene diisocyanate, 4,4-diphenylene diisocyanate, 3,3'-dimethyl-4,4diphenylmethane diisocyanate, 3-methyl-4,4'-diphenylmethane diisocyanate, diphenylester diisocyanate, 2,4-cyclohexane diisocyanate, 2,3-cyclohexane diisocyanate, 1-methyl 2,4-cyclohexyl diisocyanate, 1-methyl 2,6-cyclohexyl diisocyanate, bis-(isocyanate cyclohexyl) methane, 2,4,6-toluene triisocyanate, 2,4,4-diphenylether triisocyanate, polymethylene-polyphenyl-polyisocyanates, methylene diphenyl diisocyanate, triphenylmethane triisocyanate, 3,3'-ditolylene-4,4-diisocyanate, 4,4'-methylenebis (2-methyl-phenyl isocyanate), hexamethylene diisocyanate, 1,3-cyclohexylene diisocyanate, 1,2-cyclohexylene diisocyanate and their mixtures. In a preferred embodiment the compound incorporating isocyanate groups is 4,4-diphenylmethane-diisocyanate.

As far as the di- and multiple functional group compounds incorporating peroxide groups are concerned, these are preferably selected from benzoyl peroxide, lauroyl peroxide, isononanoyl peroxide, di-(t-butylperoxyisopropyl)benzene, for example 1,3- and 1,4-di-(-2-(tert-butylperoxy)prop-2-yl)benzene, t-butyl peroxide, dicumyl peroxide, alpha,alpha'-di(t-butylperoxy)diisopropylbenzene, 2,5-dimethyl-2,5di(t-butylperoxy)hexane, t-butyl cumyl peroxide, di-t-butylperoxide, 2,5-dimethyl-2,5-di(t-butylperoxy)hex-3-yne, di(4-t-butylcyclohexyl)peroxy dicarbonate, dicetyl peroxydicarbonate, dimyristil peroxydicarbonate, 3,6,9-triethyl-3,6,9-trimethyl-1,4,7-triperoxonane,di(2-ethylhexyl) peroxydicarbonate and their mixtures.

The di- and multiple functional group compounds incorporated in carbodiimide groups which are preferably used in the composition used according to this invention are selected from poly(cyclooctylene carbodiimide), poly(1,4-dimethylenecyclohexylene carbodiimide), poly(cyclohexylene carbodiimide), poly(ethylene carbodiimide), poly(butylene carbodiimide), poly(isobutylene carbodiimide), poly(nonylene carbodiimide), poly(dodecylene carbodiimide), poly(neopentylene carbodiimide), poly(1,4-dimethylene phenylene carbodiimide), poly(2,2',6,6'-tetraisopropyldiphenylene carbodiimide) (Stabaxol® D), poly(2,4,6-triisopropyl-1,3 -phenylene carbodiimide) (Stabaxol® P-100), poly(2,6 diisopropyl-1,3-phenylene carbodiimide) (Stabaxol® P), poly (tolyl carbodiimide), poly(4,4'- diphenylmethane carbodiimide), poly(3,3'-dimethyl-4,4'-biphenylene carbodiimide), poly(p-phenylene carbodiimide), poly(m-phenylene carbodiimide), poly(3,3'-dimethyl-4,4'-diphenylmethane carbodiimide), poly(naphthylene carbodiimide), poly(isophorone carbodiimide), poly(cumene carbodiimide), p-phenylene bis(ethylcarbodiimide), 1,6-hexamethylene bis(ethylcarbodiimide), 1,8-octamethylene bis(ethylcarbodiimide), 1,10-decamethylene bis(ethylcarbodiimide), 1,12 dodecamethylene bis(ethylcarbodiimide) and their mixtures.

Examples of di- and multiple functional group compounds incorporating epoxy groups which may advantageously be used in the composition used according to this invention are all the polyepoxides of epoxydated oils and/or styrene - glycidylether-methylmethacrylate, glycidylether methylmethacrylate included in a range of molecular weights between 1000 and 10000 and having an epoxide number per molecule in the range from 1 to 30 and preferably between 5 and 25, and epoxides selected from the group comprising: diethylene glycol diglycidylether, polyethylene glycol diglycidyl ether, glycerol polyglycidyl ether, diglycerol polyglycidyl ether, 1,2-epoxybutane, polyglycerol polyglycidyl ether, diepoxy, and diepoxy cycloaliphatic isoprenes, 1,4-cyclohexandimethanol diglycidyl ether, glycidyl 2-methylphenyl ether, glycerol propoxylatotriglycidyl ether, 1,4-butandiol diglycidyl ether, sorbitol polyglycidyl ether, glycerol diglycidyl ether, tetraglycidyl ether of meta-xylenediamine and diglycidyl ether of bisphenol A and their mixtures.

Together with the di- and multiple functional group compounds incorporating isocyanate, peroxide, carbodiimide, isocyanurate, oxazoline, epoxy, anhydride and divinylether groups in the composition according to this invention, catalysts may also be used to increase the reactivity of the reactive groups. In the case of polyepoxides, salts of fatty acids, even more preferably calcium and zinc stearates, are used.

In a particularly preferred embodiment of the invention the cross-linking agent and/or chain extender of the composition comprises compounds incorporating isocyanate groups, preferably 4,4-diphenylmethane-diisocyanate, epoxy groups, preferably from styrene - glycidylether-methylmethacrylate, glycidylether methylmethacrylate, peroxide groups, preferably 1,3- and 1,4-di(-2-(tert-butylperoxy)prop-2-yl)benzene, and mixtures thereof.

The cross-linking agent and/or chain extender of the composition is added in quantities up to 5 % by weight, preferably up to 1 % by weight, and more preferably between 0.01 and 0.4% by weight with respect to the sum of components i.-iv..

In the composition used according to the invention the filler agent (component iv) helps to improve the dimensional stability of the objects moulded from filaments according to this invention and is preferably selected from kaolin, barytes, clay, talc, calcium and magnesium, iron and lead carbonates, aluminium hydroxide, diatomaceous earth, aluminium sulfate, barium sulfate, silica, mica, titanium dioxide, wollastonite, starch, cellulose, chitin, chitosan, alginates, proteins such as glutine, zein, casein, collagen, gelatin, natural rubbers, rosinic acids and their derivatives.

The filler agent is added in quantities up to 50 % by weight, preferably up to 30 % by weight, and more preferably between 2 and 25% by weight with respect to the sum of components i.-iv..

By the term starch is meant all types of starch, that is: flour, native starch, hydrolysed starch, destructured starch, gelatinised starch, plasticised starch, thermoplastic starch, biofillers comprising complexed starch and mixtures thereof. Particularly suitable according to the invention are starches such as potato, maize, tapioca and pea starch.

Starches which are capable of being easily destructured and which have high initial molecular weights, such as for example potato starch and maize starch, have proved to be particularly advantageous.

Starch and cellulose may be present either as such or in a chemically modified form, such as for example in the form of starch or cellulose esters with a degree of substitution of between 0.2 and 2.5, starch hydroxypropylate, starch modified with fatty chains, or as cellophane.

By destructured starch reference is made here to the teachings included in patents EP-0 118 240 and EP-0 327 505, this being understood to mean starch processed in such a way that it does not have the so-called "Maltese crosses" under the optical microscope in polarised light and the so-called "ghosts" under a phase contrast microscope.

Advantageously the starch is destructured by means of a process of extrusion at temperatures of between 110 and 250°C, preferably 130°C, preferably at pressures between 0.1 and 7 MPa, preferably 0.3-6 MPa, preferably providing a specific energy of more than 0.1 kWh/kg during that extrusion.

Destructuring of the starch preferably takes place in the presence of 1-40% by weight with respect to the weight of the starch of one or more plasticisers selected from water and polyols having 2 to 22 carbon atoms. As far as the water is concerned, this may be water which includes that naturally present in the starch. Among the polyols, polyols having from 1 to 20 hydroxyl groups containing 2 to 6 carbon atoms, their ethers, thioethers and organic and inorganic esters are preferred. Examples of polyols are glycerine, diglycerol, polyglycerol, pentaerythritol, polyglycerol ethoxylate, ethylene glycol, polyethylene glycol, 1,2-propandiol, 1,3-propandiol, 1,4-butandiol, neopentylglycol, sorbitol monoacetate, sorbitol diacetate, sorbitol monoethoxylate, sorbitol diethoxylate, and mixtures thereof. In a preferred embodiment the starch is destructured in the presence of glycerol or a mixture of plasticisers comprising glycerol, more preferably comprising between 2 and 90% by weight of glycerol. Preferably the destructured or cross-linked starch used according to this invention comprises between 1 and 40% by weight of plasticisers with respect to the weight of the starch.

Compositions comprising destructured starch are particularly preferred. Preferably the starch in the composition is present in the form of particles having a circular or elliptical cross-section or in any event a cross-section similar to an ellipse having an arithmetic mean diameter, measured taking the major axis of the particle into consideration, which is less than 1 micron and more preferably less than 0.5 $\mu$m in mean diameter.

As far as the cellulose is concerned, this may be present for example in the form of cellulose fibres or wood flour.

More than one filler agent may be used in the compositions used according to this invention. In this case mixtures containing starch and at least one other filler agent are particularly preferred.

In addition to components i.-iv., the composition used according to this invention preferably also contains at least one other component selected from the group comprising plasticisers, UV stabilisers, lubricants, nucleating agents, surfactants, antistatic agents, pigments, anti-flame agents, compatibilising agents, and polymer components preferably selected from the group comprising polyesters of a diacid diol which are other than polyester i., polyamides, polyurethanes, polyethers, polyureas, polycarbonates.

As far as the plasticisers are concerned, the composition used according to this invention preferably includes, in addition to the plasticisers preferably used for preparation of the destructured starch described above, one or more plasticisers selected from the group comprising phthalates, such as for example diisononyl phthalate, trimellitates, such as for example the esters of trimellitic acid with $C_4$-$C_{20}$ monoalcohols preferably selected from the group comprising n-octanol and n-decanol, and aliphatic esters having the following structure:

$$R_1\text{-O- C(O)-}R_4\text{-C(O)-[-O-}R_2\text{-O-C(O)-}R_5\text{-C(O)-]}_m\text{-O-}R_3$$

in which

R$_1$ is selected from one or more groups comprising H, linear and branched, saturated and unsaturated alkyl residues of the C$_1$-C$_{24}$ type, polyol residues esterified with C$_1$-C$_{24}$ monocarboxylic acids;

R$_2$ comprises -CH$_2$-C(CH$_3$)$_2$-CH$_2$- groups and C$_2$-C$_8$ alkylenes, and comprises at least 50% in moles of the said -CH$_2$-C(CH$_3$)$_2$-CH$_2$- groups;

R$_3$ is selected from one or more of the groups comprising H, linear and branched saturated and unsaturated alkyl residues of the C$_1$-C$_{24}$ type, polyol residues esterified with C$_1$-C$_{24}$ monocarboxylic acids;

R$_4$ and R$_5$ are the same or different, comprise one or more C$_2$-C$_{22}$, preferably C$_2$-C$_{11}$, more preferably C$_4$-C$_9$ alkylenes and comprise at least 50% in moles of C$_7$ alkylenes.

m is a number of between 1 and 20, preferably 2-10, more preferably 3-7. Preferably at least one of the R$_1$ and/or R$_3$ groups in the said esters comprises, preferably in a quantity ≥ 10% in moles, more preferably ≥ 20%, even more preferably ≥ 25% in moles in comparison with the total quantity of R$_1$ and/or R$_3$ groups, polyol residues esterified with at least one C$_1$-C$_{24}$ monocarboxylic acid selected from the group comprising stearic acid, palmitic acid, 9-ketostearic acid, 10-ketostearic acid and mixtures thereof. Examples of aliphatic esters of this type are described in WO2015/104375 A1 and WO 2015/104377 A1.

When present the plasticisers selected are preferably present up to 30% by weight with respect to the total weight of the composition.

The lubricants are preferably selected from the esters and metal salts of fatty acids, such as for example zinc stearate, calcium stearate, aluminium stearate and acetyl stearate. Preferably the composition used according to this invention comprises up to 1% by weight of lubricating agents, more preferably up to 0.5% by weight in relation to the total weight of the composition.

Examples of nucleating agents include the sodium salt of saccharine, calcium silicate, sodium benzoate, calcium titanate, boron nitride, isotactic polypropylene, PLA having a low molecular weight. These additives are preferably added in quantities up to 10% by weight and more preferably between 2 and 6% by weight with respect to the total weight of the composition. Pigments may also be added if necessary, for example titanium dioxide, clays, copper phthalocyanin, titanium dioxide, silicates, oxides and hydroxides of iron, carbon black and magnesium oxide. These additives are preferably added up to 10% by weight.

Preferably the polycarbonates of the composition used according to this invention are selected from the group comprising polyalkylene carbonates, more preferably polyethylene carbonates, polypropylene carbonates, polybutylene carbonates, their mixtures and both random and block copolymers.

Among the polymers, those preferred are those selected from the group comprising polyethylene glycols, polypropylene glycols, polybutylene glycols, their copolymers and their mixtures having molecular weights from 70000 to 500000.

As far as the diacid diol polyesters which are other than polyester i. are concerned, these preferably comprise:

a) a dicarboxylic component comprising with respect to the total dicarboxylic component:

a1) 80 -100% in moles of units deriving from at least one aromatic dicarboxylic acid,
a2) 0-20% in moles of units deriving from at least one saturated aliphatic dicarboxylic acid,
a3) 0-5% in moles of units deriving from at least one unsaturated aliphatic dicarboxylic acid;

b) a diol component comprising with respect to the total diol component:

b1) 95-100% in moles of units deriving from at least one saturated aliphatic diol;
b2) 0-5% in moles of units deriving from at least one unsaturated aliphatic diol.

Preferably the aromatic dicarboxylic acids, saturated aliphatic dicarboxylic acids, unsaturated aliphatic dicarboxylic acids, saturated aliphatic diols and unsaturated aliphatic diols for these polyesters are selected from those described above for the polyester (component i.) of the composition according to this invention. More preferably the said diacid-diol polyesters which are different from polyester i. are selected from the group comprising poly(ethylene terephthalate), poly(propylene terephthalate), poly(butylene terephthalate), poly(ethylene 2,5-furandicarboxylate), poly(propylene 2,5-furandicarboxylate), poly(butylene 2,5-furandicarboxylate) and block or random copolymers of the poly(alkylene 2,5-furandicarboxylate-co-alkylene terephthalate) type.

The filaments comprising the composition used according to this invention may be prepared by means of processes having a single stage or various passes. Preferably the filaments used according to this invention can be obtained by mixing the components in the typical equipment used for the purpose, for example roller mixers, Banbury internal mixers, extruders, and setting temperature, pressure and shear force conditions suitable for ensuring intimate mixing of the individual components.

In one embodiment the filaments used according to this invention are obtained from the individual components of the composition: the components are fed to an extruder (or any other equipment suitable for the purpose) operating under temperature, pressure and shear force conditions suitable for ensuring their intimate mixing and the filaments are obtained from a suitable nozzle at the outlet from the extruder.

Operating in this way, preferred conditions of preparation are an extrusion line for monofilaments, preferably fitted with a calibration tank, under vacuum.

In another embodiment the filaments are prepared from the composition in which the components have already been intimately premixed, for example by means of extrusion. In this case the composition, typically in the form of pellets, is fed to an extruder (or any other equipment suitable for the purpose) in which the composition is brought to the fused state, obtaining the filaments through a suitable nozzle at the outlet from the extruder.

Preferably, after the extruder outlet, the filaments are delivered to a gauging stage which ensures that the filaments have a constant nominal diameter, typically between 1 mm and 4 mm, preferably between 1.75 mm and 3 mm.

When preparation is complete the filaments are wound on each other onto a suitable support, producing bobbins, coils or spools of appropriate length.

The filaments comprising the composition used according to this invention obtained in this way can then be used for the subsequent FDM printing process, which comprises the following stages:

1) feeding at least one FDM printing filament comprising the composition according to this invention to a melting unit equipped with at least one loading system, preferably comprising at least one toothed wheel, at least one heating system, at least one inlet nozzle and at least one outlet nozzle in which the opening of the outlet nozzle is smaller than the opening of the inlet nozzle;

2) obtaining at least one fused filament comprising the composition used according to this invention from the outlet nozzle from the melting unit;

3) depositing at least one layer of the said at least one fused filament on a printing plane, obtaining a three-dimensional printed object;

4) removing the said three dimensional object from the said printing plane.

Preferably the heating system in the melting unit heats the latter to a temperature of between 180°C and 220°C, more preferably between 190°C and 200°C, thus obtaining a fused filament in stage 2) of this process.

Preferably, during stage c) of this process the layer of fused filament is deposited with a deposition rate of between 10 and 100 mm/s, preferably between 30 and 50 mm/s, thus obtaining a layer having a thickness which is preferably between 0.05 and 0.3 mm, more preferably between 0.1 and 0.2 mm.

In a preferred embodiment of this invention the printing plane onto which the fused filament is deposited is thermostatted to a temperature of between 0°C and 70°C, more preferably between 20°C and 30°C.

Preferred conditions for the printing process according to this invention provides for the use of a filament having a nominal diameter of 1.75 mm together with a FDM printing unit equipped with a knurled bush controlling the advance of the filament towards the inlet nozzle to the melting unit (diameter of the inlet nozzle 1.75 mm, diameter of the outlet nozzle 0.35 mm). In this configuration the melting unit is preferably heated to 200°C through a suitable heating system and the layer of fused filament obtained from the outlet nozzle of the melting unit is deposited at a rate of 40 mm/s from the melting unit onto a glass plane and has a thickness of 0.1 mm. The printing plane is preferably at ambient temperature.

In a second aspect this invention relates to the FDM printing process described above and formed objects which can be obtained using it.

The formed object which can be obtained by the FDM printing process according to this invention in fact appears to be characterised, for the same composition, by significantly lower density values in comparison with objects formed using different technologies, although maintaining dimensions and resistance to fracture properties which are in any event comparable to the latter. Without wishing hereby to be bound to any specific theory, it is in fact felt that the structure of objects formed using FDM, which consists of overlapping layers of material, gives rise to the formation of microcavities which are capable of both ensuring parity of dimensions and a lower density for the object.

In addition to this, the said structure appears to contribute positively to the disintegratability properties of the material under composting conditions, thus encouraging its compostability.

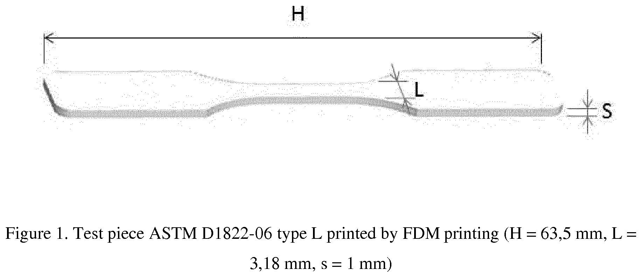

Figure 1 shows a graphical representation of a test piece printed by FDM printing in the examples in this application, together with dimensions relating to the width of the useful cross-section (L), the length of the entire test piece (H) and the thickness (S).

The invention will now be illustrated through some embodiments which are intended to be by way of example and not limiting the scope of protection of this patent application.

EXAMPLES

*Partial Example 1 - Synthesis of poly(1,4-butylene succinate) (component i-2 in Table 1 )*

17150 g of succinic acid, 14,000 g of 1,4-butandiol, 26.75 g of glycerine and 2.0 g and an 80% by weight ethanolic solution of diisopropyl triethanolamino titanate (Tyzor TE, containing 8.2% by weight of titanium) were placed in a steel reactor having a geometrical capacity of 24 litres fitted with a mechanical stirring system, an inlet for nitrogen, a distillation column, a system for knocking back high boiling point distillates and a connection to a high vacuum system, in a diol/dicarboxylic (MGR) molar ratio of 1.08. The temperature of the mass was gradually increased to 230°C over a period of 120 minutes.

When 95% of the theoretical water was distilled off, 21.25 g of tetra n-butyl titanate (corresponding to 119 ppm of metal with respect to the quantity of poly 1,4-butylenesuccinate which could be theoretically obtained by converting all the succinic acid fed to the reactor) was added. The temperature of the reactor was then raised to 235-240°C and the pressure was gradually reduced until a value of less than 2 mbar was reached over a period of 60 minutes. The reaction was allowed to proceed for the time necessary to obtain a poly(1,4-1,4-butylene succinate) having an MFR of approximately 16 (g/10 minutes at 190°C and 2.16 kg), and then the material was discharged into a water bath in the form of a filament and granulated.

*Comparative Example 1 - Preparation of PLA filament*

A PLA monofilament (IngeoTM 4043D - MFI = 3 g/min at 190°C and 2.16 kg) compatible with the use of a DeltaWASP FDM printer was produced using a bench filament extruder (Filastruder, www.filastruder.com) provided with a heated zone, 5/8" screws (Irwin 3043007), fixed advance, a unit with a single circular nozzle of diameter 1.75 mm. The extrusion temperature was set to 160°C.

Once extruded the filament was analysed to determine the MFR, density and dimensions, measuring the minimum and maximum diameters of twenty different cross-sections located at least 10 cm apart. The results are shown in Table 2, in the section "Spinning".

The filament was then wound on itself to form a bobbin suitable for use for FDM printing.

*Comparative Example 2 - Printing with PLA filament at 200°C*

The bobbin of PLA filament obtained in Comparative Example 1 was used to print an ASTM D1822-06 type L test piece (see Figure 1) using a 20 x 40 DeltaWASP printer fitted with a melting unit comprising a toothed wheel for loading the filament, a heating system, an inlet nozzle (diameter: 1.75 mm) and an outlet nozzle (diameter 0.35 mm). The graphical representation of the piece was created using Draftsight and Solidworks software. Printing conditions were set to have the following parameters:

- Thickness of the printed layer: 0.1 mm;
- Layer filling: 100%;
- Printing speed: 40 mm/s;
- Printing plane temperature: 50°C;
- Temperature of the melting unit: 200°C;

The PLA filter leaving the outlet nozzle of the melting unit appeared to be inhomogeneous and irregular, and did not make it possible to obtain the desired printed object.

*Comparative Example 3 - Printing with PLA filament at 220°C*

Comparative Example 2 was repeated setting the temperature of the melting unit to 220°C instead of 200°C. 3 copies of the ASTM D1822-06 type L test piece (see Figure 1) were then printed, and these were then characterised to establish their dimensional stability in the H (length) and L (width of useful cross-section) and S (thickness) dimensions shown in Figure 1, determining the difference between the test piece actually printed and the design data in percentage terms. All the test pieces were obtained using the same printing orientation. The results are shown in Table 2 in the "3D printing" section.

*Examples 1-7 - Preparation of filaments using materials according to the invention*

The compositions according to Examples 1-7 shown in Table 1 were used to produce filaments for FDM printing compatible with use of the DeltaWASP FDM printer. For preparation of the compositions the materials shown in Table 1 were fed to a co-rotating APV 2030 twin-screw extruder (L/D = 40; diameter 30 mm) operating under the following conditions:

- rpm: 170
- throughput: 10 kg/h
- thermal profile: 30-90-140-150-200 x 9-160 x 3°C
- open degassing (only for preparation of the compositions in Examples 2 and 4).

The compositions extruded in this way were then used to prepare filaments by means of a Filastruder single screw extruder operating at 155°C, 3 rpm and fitted with a spinneret having a circular hole of 1.75 mm. The filament was collected by free fall, without therefore applying any further tensional force.

After extrusion the filaments were analysed to determine the MFR, density and dimensions, measuring the minimum and maximum diameter of twenty different cross-sections at least 10 cm apart. The results are shown in Table 2, in section "Spinning".

The filaments were then wound on themselves to form 7 bobbins suitable for use for FDM printing.

*Examples 8-14 - Printing with the filaments in Examples 1-7*

- Thickness of the printed layer: 0.1 mm;
- Layer filling: 100%;
- Print speed: 40 mm/s;
- Printing plane temperature: 50°C,
- Temperature of the melting unit: 200°C

Using each bobbin 3 copies of an ASTM D1822-06 type L test piece were thus printed, and were then characterised to evaluate their density and dimensional stability in the H (length) and L (useful cross-section width) and S (thickness) dimensions shown in Figure 1, determining the difference between the test piece actually printed and the design data in terms of %.

The results are shown in Table 2, in the section "3D printing".

TABLE 1 - Compositions Examples 1-7

| Components | Example 1 (% by weight) | Example 2 (% by weight) | Example 3 (% by weight) | Example 4 (% by weight) | Example 5 (% by weight) | Example 6 (% by weight) | Example 7 (% by weight) |
|---|---|---|---|---|---|---|---|
| i-1 | 27.00 | 46.60 | 24.99 | 61.20 | 74.81 | 70.00 | |
| i-2 | | | | | | | 60.00 |
| ii | 56.70 | 13.40 | 74.98 | 7.70 | 24.94 | 30.00 | 40.00 |
| iii-1 | | | 0.03 | | | | |
| iii-2 | | | | | 0.25 | | |
| iv-1 | 16.30 | | | | | | |
| iv-2 | | 40.00 | | | | | |

(continued)

| Components | Example 1 (% by weight) | Example 2 (% by weight) | Example 3 (% by weight) | Example 4 (% by weight) | Example 5 (% by weight) | Example 6 (% by weight) | Example 7 (% by weight) |
|---|---|---|---|---|---|---|---|
| iv-3 | | | | 31.10 | | | |

i-1: Poly(1,4-butylene sebacate-co-terephthalate) having 56% in moles of butylene terephthalate units, MFR 11 g/10 min, (@ 190°C, 2.16 kg), prepared in accordance with the teaching in Example 1 of EP 1 858 951.

i-2 Poly(1,4-butylene succinate), MFR 16 g/10 min (@ 190°C, 2.16 kg), prepared in accordance with the teaching in Partial Example 1;

ii PLA Ingeo 4043D, MFR 2 g/10 min (@ 190°C, 2.16 kg) iii-1 Luperox F40MG (40% of a mixture of 1,3- and 1,4-di(-2-(tert-butylperoxy)prop-2-yl)benzene, 60% ethylene - propylene copolymer) iii-2 Joncryl ADR4368S iv-1 Mistron R10C talc iv-2 LA.SO.LE type 75 wood flour iv-3 starch plus plasticisers: 22.7% cerestar c*flex 03408 maize starch, 4.8% water, 3.6% Spiga Nord polyglycerol

TABLE 2

| Example | Spinning | | | | | | | | 3D spinning | | | |
|---|---|---|---|---|---|---|---|---|---|---|---|---|
| | MFR | | | Filament dimensions | | | | Density | Dumbbell shrinkage | | | Density |
| | | | | Mean Φ | Min Φ | Max Φ | f | | | | | |
| | °C | kg | g/10' | mm | mm | mm | % | g/cm³ | H/% | L/% | s/% | g/cm³ |
| Comparative 1 | 190 | 2.16 | 2.2-3.5 | 1.57 ± 0.06 | 1.45 | 1.65 | 2.2 | 1.29 | < 1 | 19.5 | -23.3 | 0.98 |
| 1 | 160 | 5 | 3 | 1.56 ± 0.05 | 1.45 | 1.65 | 2.4 | 1.51 | < 1 | 11.6 | 3.3 | 1.33 |
| 2 | 190 | 2.16 | 1.2 | 1.47 ± 0.05 | 1.35 | 1.60 | 3.2 | 1.29 | < 1 | 13.2 | -13.3 | 0.99 |
| 3 | 190 | 2.16 | 6 | 1.36 ± 0.12 | 1.15 | 1.65 | 3.2 | 1.28 | < 1 | -0.4 | 0.0 | 1.02 |
| 4 | 160 | 5 | 6.3 | 1.43 ± 0.11 | 1.25 | 1.65 | 2.6 | 1.33 | < 1 | 12.2 | -11.7 | 1.00 |
| 5 | 190 | 2.16 | 6.6 | 1.56 ± 0.10 | 1.30 | 1.70 | 2.4 | 1.29 | < 1 | 1.7 | -13.3 | 1.16 |
| 6 | 190 | 2.16 | 6.1 | 1.46 ± 0.11 | 1.25 | 1.65 | 2.8 | 1.23 | < 1 | -4.1 | -11.7 | 1.11 |
| 7 | 190 | 2.16 | 10.67 | 1.48 ± 0.11 | 1.30 | 1.74 | 3.0 | 1.41 | < 1 | 15.3 | -10.0 | 1.05 |

**Claims**

1. Use of strands in a fused deposition modeling printing (FDM) process, said strands comprising a composition comprising, with respect to the sum of components i.-iv.:

   i. 10-90% by weight of at least one polyester comprising:

   a) a dicarboxylic component comprising, with respect to the total of the dicarboxylic component:

   a1) 0 -80 % by moles of units deriving from at least one aromatic dicarboxylic acid,
   a2) 20-100 % by moles of units deriving from at least one saturated aliphatic dicarboxylic acid,
   a3) 0 - 5 % by moles of units deriving from at least one non saturated aliphatic dicarboxylic acid;

   b) a diolic component comprising, with respect to the total diolic component,:

   b1) 95 - 100 % by moles of units deriving from at least one saturated aliphatic diol;
   b2) 0- 5 % by moles of units deriving from at least one non saturated aliphatic diol;

ii. 5 - 90 % by weight of at least one polyhydroxyalkanoate;
iii. 0 - 5% by weight of at least one crosslinking agent and/or chain extender comprising at least one di- and/or polyfunctional compound carrying isocyanate, peroxide, carbodiimide, isocyanurate, oxazoline, epoxy, anhydride or divinylether groups and mixtures thereof;
iv. 0 - 50 % by weight of at least one filler..

2. Fused deposition modeling (FDM) printing process comprising the steps of:

1) Feeding at least one strand according to claim 1 to a fuser provided with at least one loading system, at least one heating system, at least one inlet nozzle and at least one outlet nozzle;
2) Obtaining from the outlet nozzle of the fuser the strand fed in step 1 in a molten state;
3) Depositing on a printing plane at least one layer of the fused strand obtained in step 2, obtaining a threedimensional printed object;
4) Removing said threedimensional printed object of step 3 from said printing plane.

3. Printed object obtainable by the fused deposition modeling (FDM) printing process according to claim 2.

**Patentansprüche**

1. Nutzung von Strängen in einem Fused Deposition Modeling-Druckverfahren (FDM), wobei die Stränge eine Zusammensetzung umfassen, welche in Bezug auf die Summe von Komponenten i.-iv. umfassen:

i. 10-90% Gew.-% zumindest eines Polyesters, umfassend:

a) eine Dicarbonkomponente, umfassend, in Bezug auf die Summe der Dicarbonkomponente:

a1) 0-80 Mol-% von aus zumindest einer aromatischen Dicarbonsäure hergeleiteten Einheiten,
a2) 20-100 Mol-% von aus zumindest einer gesättigten aliphatischen Dicarbonsäure hergeleiteten Einheiten,
a3) 0-5 Mol-% von aus zumindest einer ungesättigten aliphatischen Dicarbonsäure hergeleiteten Einheiten;

b) eine Diolkomponente, umfassend, in Bezug auf die Summe der Diolkomponente:

b1) 95-100 Mol-% von aus zumindest einem gesättigten aliphatischen Diol hergeleiteten Einheiten;
b2) 0-5 Mol-% von aus zumindest einem ungesättigten aliphatischen Diol hergeleiteten Einheiten;

ii. 5-90% Gew.-% zumindest eines Polyhydroxyalkanoats;
iii. 0-5 Gew.-% zumindest eines Vernetzungsmittels und/oder Kettenverlängerers, umfassend zumindest eine bi- oder multifunktionale Verbindung, welche Isocyanat-, Peroxid-, Carbodiimid-, Isocyanurat-, Oxazolin-, Epoxyharz-, Anhydrid- oder Divinylethergruppen und Gemische davon beinhaltet;
iv. 0-50% Gew.-% zumindest eines Füllstoffs.

2. Fused Deposition Modeling (FDM)-Druckverfahren, umfassend die folgenden Schritte:

1) Zuführen zumindest eines Strangs nach Anspruch 1 in eine Fixiereinheit, welche mit zumindest einem Ladesystem, zumindest einem Heizsystem, zumindest einer Einlassdüse und zumindest einer Auslassdüse versehen ist;
2) Erhalten des in Schritt 1 zugeführten Strangs von der Auslassdüse der Fixiereinheit in einem geschmolzenen Zustand;
3) Aufbringen zumindest einer Schicht des in Schritt 2 erhaltenen geschmolzenen Strangs auf eine Druckebene, wodurch ein dreidimensionales gedrucktes Objekt erhalten wird;
4) Entfernen des dreidimensionalen gedruckten Objekt aus Schritt 3 von der Druckebene.

3. Gedrucktes Objekt, erhältlich durch das Fused Deposition Modeling (FDM) Druckverfahren nach Anspruch 2.

**Revendications**

1. Utilisation de brins dans un procédé d'impression par modelage par dépôt de matériau fondu (FDM), lesdits brins comprenant une composition comprenant, par rapport à la somme de composants i.-iv. :

    i. 10 à 90 % en poids d'au moins un polyester comprenant :

        a) un composant dicarboxylique comprenant, par rapport au total du composant dicarboxylique :

            a1) 0 à 80 % en moles d'unités dérivant d'au moins un acide dicarboxylique aromatique,
            a2) 20 à 100 % en moles d'unités dérivant d'au moins un acide dicarboxylique aliphatique saturé,
            a3) 0 à 5 % en moles d'unités dérivant d'au moins un acide dicarboxylique aliphatique saturé ;

        b) un composant de diol comprenant, par rapport au composant de diol total :

            b1) 95 à 100 % en moles d'unités dérivant d'au moins un diol aliphatique saturé ;
            b2) 0 à 5 % en moles d'unités dérivant d'au moins un diol aliphatique saturé ;

    ii. 5 à 90 % en poids d'au moins un polyhydroxyalcanoate ;
    iii. 0 à 5 % en poids d'au moins un agent de réticulation et/ou extenseur de chaîne comprenant au moins un composé di- et/ou polyfonctionnel portant des groupes d'isocyanate, de peroxyde, de carbodiimide, d'isocyanurate, d'oxazoline, d'époxy, d'anhydride ou de divinyléther et des mélanges de ceux-ci ;
    iv. 0 à 50 % en poids d'au moins un élément de remplissage.

2. Procédé d'impression par modelage par dépôt de matériau fondu (FDM) comprenant les étapes de :

    1) l'alimentation au moins d'un brin selon la revendication 1 à un élément de fusion doté d'au moins un système de chargement, d'au moins un système de chauffage, d'au moins une buse d'entrée et d'au moins une buse de sortie ;
    2) l'obtention à partir de la buse de sortie de l'élément de fusion, du brin alimenté à l'étape 1 dans un état fondu ;
    3) le dépôt sur un plan d'impression au moins d'une couche du brin fondu obtenu à l'étape 2, obtenant un objet imprimé en trois dimensions ;
    4) le retrait dudit objet imprimé en trois dimensions de l'étape 3 dudit plan d'impression.

3. Objet imprimé pouvant être obtenu par le procédé d'impression par modelage par dépôt de matériau fondu (FDM) selon la revendication 2.

Figure 1. Test piece ASTM D1822-06 type L printed by FDM printing (H = 63,5 mm, L = 3,18 mm, s = 1 mm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013101992 A1
- WO 2015069986 A1
- EP 0118240 A
- EP 0327505 A
- WO 2015104375 A1
- WO 2015104377 A1
- EP 1858951 A